# FASCICULE DE BREVET EUROPEEN

(11) **EP 3 832 469 B1**
(45) Date de publication et mention de la délivrance du brevet: **22.02.2023**
(21) Numéro de dépôt: 20211471.6
(22) Date de dépôt: 03.12.2020
(51) Int. Cl.: G06F 12/02, G06F 11/36, G06F 21/55, G06F 12/14, G06F 13/10, G06F 13/40

(54) **SYSTÈME ÉLECTRONIQUE SÉCURISÉ COMPORTANT UN PROCESSEUR ET UN COMPOSANT MÉMOIRE ; COMPOSANT PROGRAMMABLE ASSOCIÉ**
GESICHERTES ELEKTRONISCHES SYSTEM MIT EINEM PROZESSOR UND EINER SPEICHERKOMPONENTE, ENTSPRECHENDE PROGRAMMIERBARE KOMPONENTE
SECURE ELECTRONIC SYSTEM COMPRISING A PROCESSOR AND A MEMORY COMPONENT; ASSOCIATED PROGRAMMABLE COMPONENT

(30) Priorité: 06.12.2019 FR 1913850
(43) Date de publication de la demande: 09.06.2021
(73) Titulaire: THALES, 92400 Courbevoie (FR)
(72) Inventeur: LEMAHIEU, Steeve, 49300 Cholet (FR); BEN HASSEN, Jonathan, 49300 Cholet (FR); CHEVOLLEAU, Samuel, 49300 Cholet (FR)
(74) Mandataire: Lavoix

(56) Documents cités:
- RU-C1- 2 677 366
- US-A1- 2014 283 118
- US-A1- 2015 286 585
- US-A1- 2016 299 865
- US-A1- 2019 272 240
- US-B1- 10 133 497

## Description

La présente invention a pour domaine celui des systèmes électroniques du type comportant un processeur, un composant mémoire, et un canal de communication, le canal de communication comportant au moins un bus de commande pouvant être piloté par le processeur pour accéder au composant mémoire.

Les mémoires flash sont largement utilisées pour le stockage de logiciels résidents : programme d'amorçage (« boot » en anglais) d'une unité centrale de traitement ou CPU, applicatifs, banque de données...

Parmi les mémoires flash, on connait les mémoires eMMC (pour « Embedded MultiMedia Card » en anglais). Une mémoire eMMC est un composant résultant de l'intégration d'une mémoire flash NAND et d'un contrôleur mémoire.

Les mémoires eMMC sont utilisées dans l'industrie et la plupart des processeurs destinés à être intégrés dans des systèmes électroniques embarqués disposent d'une interface eMMC.

Or, une mémoire eMMC dispose d'un bus de commande permettant à un composant hôte de piloter les accès à la mémoire.

Les commandes de lecture ou d'écriture ne sont donc pas pilotées par une interface d'entrée/sortie de la mémoire, comme par exemple sur les anciennes générations de mémoire flash, mais c'est le composant hôte, en utilisant le bus de commande, qui détermine l'action que la mémoire a à exécuter : lecture (« Read »), écriture (« Write »), état (« Status »), configuration (« Configuration »), etc.

Le contrôleur de la mémoire eMMC permet une gestion des autorisations, notamment d'écriture, afin de protéger la mémoire flash NAND contre des écritures non souhaitées et par conséquent de maintenir son contenu intègre.

Cependant, le contrôleur de la mémoire eMMC applique une gestion des autorisations qui peut être altérée par le composant hôte.

Ainsi, dans le document US2015/286585 A1, même si le contrôleur de la mémoire eMMC est adapté de manière à mettre en oeuvre une procédure d'authentification du composant hôte, le composant hôte, une fois authentifié, peut encore altérer la configuration qu'applique le contrôleur de la mémoire eMMC pour la gestion des autorisations.

Une protection de la mémoire eMMC gérée par la mémoire eMMC elle-même est donc dépendante du logiciel qui est exécuté par le composant hôte. Elle ne permet pas de protéger de manière efficace la mémoire eMMC de certaines menaces, telles que par exemple en cas de défaillance involontaire du logiciel exécuté par le composant hôte (bogue logiciel ou matériel), ou encore en cas de défaillance volontaire du logiciel exécuté par composant hôte (utilisation de failles de sécurité sur le logiciel par un attaquant pour réaliser des actions non souhaitées et corrompre le contenu de la mémoire eMMC, par exemple en y stockant des données sensibles non désirées par l'utilisateur).

Le document US 2019/272240 A1 divulgue un FPGA intercalé entre un processeur et une mémoire SSD pour accélérer les transactions appartenant à une gamme d'adresses prédéfinie. Des filtres sont associés à chacun des ports du FPGA pour filtrer les transactions reçues.

Le document US 2016/299865 A1 divulgue un composant placé en coupure entre une pluralité de mémoires USB et un ordinateur hôte. Ce composant est destiné à protéger l'ordinateur hôte en filtrant les commandes provenant des mémoires USB.

La présente invention a pour but de répondre à ce problème de la sécurisation des accès à une mémoire flash munie d'un bus de commande pour être pilotée par le composant hôte.

L'invention a pour objet un système électronique et un dispositif de confiance destiné à être intégré dans le système précédent selon les revendications annexées.

La présente invention permet donc de protéger la mémoire flash en mettant un composant programmable en coupure entre la mémoire et le composant hôte. La présence de ce composant programmable offre la possibilité à un composant tiers de confiance de contrôler les autorisations d'accès à la mémoire

L'invention et ses avantages seront mieux compris à la lecture de la description détaillée qui va suivre d'un mode de réalisation particulier, donné uniquement à titre d'exemple illustratif et non limitatif, la description étant faite en se référant aux dessins annexés sur lesquels :
- La figure 1 est une représentation schématique d'un mode de réalisation préféré d'un système électronique selon l'invention ;
- La figure 2 est une représentation sous forme de blocs du procédé mis en oeuvre par le système de la figure 1 ; et,
- La figure 3 est un chronogramme représentant des cycles successifs de fonctionnement du système de la figure 1.

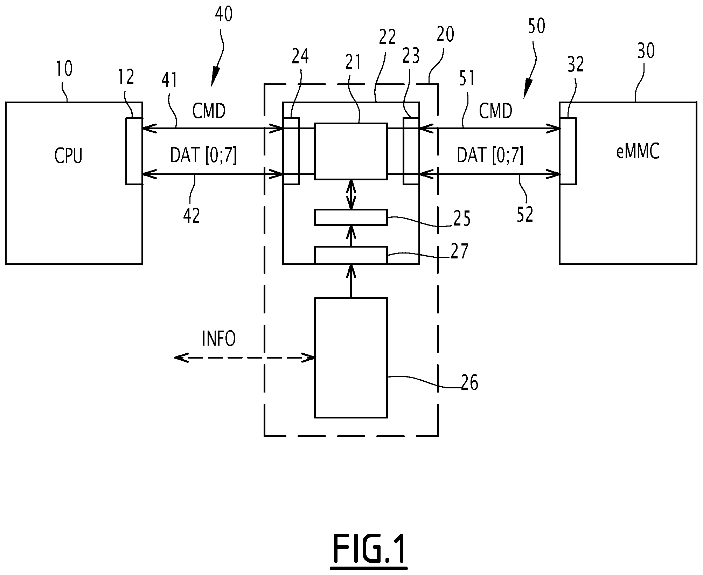

La figure 1 représente de manière schématique un système électronique 1 selon l'invention.

Le système 1 comporte un processeur 10 et une mémoire 30.

La mémoire 30 est une mémoire flash du type pilotable par un composant hôte externe au travers d'un bus de commande. La mémoire 30 est par exemple une mémoire eMMC.

Dans le mode de réalisation décrit ici en détails, le composant hôte cherchant à accéder à la mémoire 30 est constitué par le processeur 10.

Le processeur 10 et la mémoire 30 sont conformes à l'état de la technique. Un canal de communication est établi entre le processeur 10 et la mémoire 30.

En coupure entre le processeur 10 et la mémoire 30, le système 1 comporte, le long du canal de communication, un dispositif de sécurité 20.

Le dispositif de sécurité 20 est propre à intercepter et à les filtrer les commandes émises par le processeur 10, de manière à retransmettre vers la mémoire 30 uniquement les commandes qui sont conformes à certaines règles de sécurité avec lesquelles le dispositif 20 est configuré.

Le dispositif de sécurité 20 est vue depuis le processeur 10 comme une mémoire eMMC. Le dispositif de sécurité 20 émule par conséquent le comportement d'une telle mémoire flash, en particulier celui de la mémoire 30.

De manière similaire, vue depuis la mémoire 30, le dispositif de sécurité 20 émule le comportement d'un processeur, en particulier celui du processeur 10.

Dans le mode de réalisation actuellement préféré, représenté à la figure 1, le dispositif de sécurité 20 comporte un composant programmable 22 et un composant de confiance 26.

Le composant programmable 22 est intégré le long du canal de communication entre le processeur 10 et le composant 30.

Plus précisément, le composant programmable 22 comporte un port 24 propre à être couplé avec une interface eMMC 12 du processeur 10. Le composant programmable 22 comporte une interface eMMC 23 propre à être couplée avec un port 32 de la mémoire 30.

Ainsi, le canal de communication entre l'interface 12 du processeur 10 et le port 32 de la mémoire 30 est subdivisé en un premier canal de communication 40 entre le processeur 10 et le composant programmable 22 et un second canal de communication 50 entre le composant programmable 22 et la mémoire 30.

Les premier et second canaux, 40 et 50, sont conformes à un canal de communication qui aurait permis une communication directe entre le processeur 10 et la mémoire 30.

Le premier canal 40 (respectivement le second canal 50) comporte un bus de commande 41 (un bus de commande 51) pour l'échange de commandes et un bus de données 42 (un bus de données 52) pour l'échange de données.

Le composant programmable 22 comporte, entre le port 24 et l'interface 23, une unité de filtrage 21.

L'unité de filtrage 21 est propre à appliquer une ou plusieurs règles de sécurité. Les règles de sécurité sont par exemple définies par une liste de commandes interdites stockée dans un espace mémoire 25 du dispositif programmable.

En communication descendante du processeur 10 vers la mémoire 30, l'unité de filtrage 21 est adaptée pour, dans un état bloquant, bloquer une commande reçue du processeur 10 sur le bus de commande 41 (et éventuellement les données associées à cette commande reçues sur le bus de données 42) ou pour, dans un état passant, retransmettre une commande reçue du processeur 10 sur le bus de commande 41 (et éventuellement les données associées à cette commande reçues sur le bus de données 42) vers la mémoire 30 sur le bus de commande 51 (et éventuellement les données associées à cette commande sur le bus de données 52).

En communication montante de la mémoire 30 vers le processeur 10, dans un état passant, l'unité de filtrage 21 retransmet une réponse reçue de la mémoire 30 sur le bus de commande 51 (et éventuellement les données associées à cette réponse reçues sur le bus de données 52) vers le processeur 10 sur le bus de commande 41 (et éventuellement les données associées à cette réponse sur le bus de données 42).

Le composant de confiance 26 est par exemple un contrôleur maître du système électronique 1.

Le composant de confiance 26 est propre à déterminer un mode de fonctionnement courant du processeur 10, à partir de différentes données INFO reçues de différents composants constitutifs du système électronique 1.

Par exemple, le composant de confiance 26 peut déterminer que le mode de fonctionnement courant du processeur 10 est :
- un mode « boot » : lors d'une phase de démarrage du processeur 10 ;
- un mode « normal » : au cours du fonctionnement normal du processeur 10, après la phase de démarrage ;
- un mode « téléchargement » : au cours d'une phase de téléchargement par le processeur 10 d'une mise à jour d'un logiciel.

Le composant de confiance 26 est interfacé avec un port 27 du composant programmable 22.

Le composant de confiance 26 est propre à commander l'unité de filtrage 21 pour modifier le filtrage réalisé par le composant programmable 22.

De préférence, cette modification du filtrage est réalisée en fonction du mode de fonctionnement courant du processeur 10.

Pour ce faire, dans le mode de présent mode de réalisation, le composant de confiance 26 vient changer la liste des commandes interdites qui est stockée dans l'espace mémoire 25 du composant programmable 22 et que ce composant utilise pour réaliser le filtrage des commandes.

Par exemple, dans le mode « boot », la liste des commandes interdites est telle que toute fonction de lecture ou écriture du processeur dans la mémoire est interdite.

Dans le mode « normal », la liste des commandes interdites est telle que seules les fonctions de lecture dans la mémoire sont autorisées.

Dans le mode « téléchargement », la liste des commandes interdites est telle que seules les fonctions d'écriture à certaines adresses de la mémoire sont autorisées.

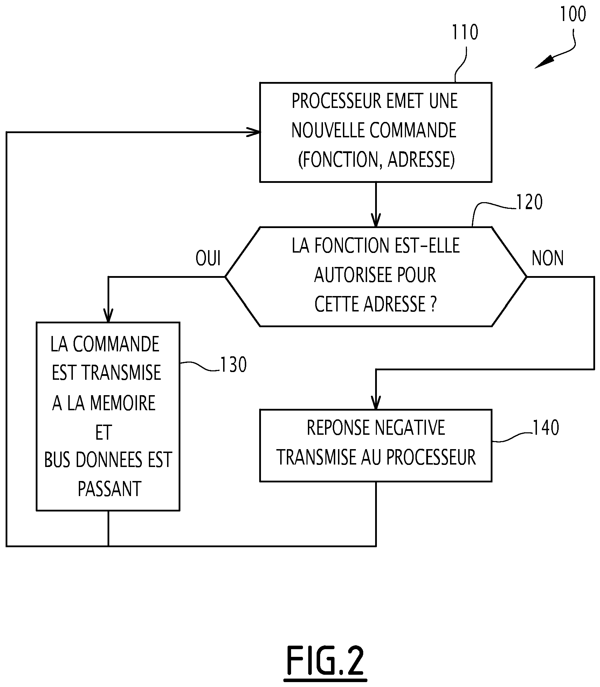

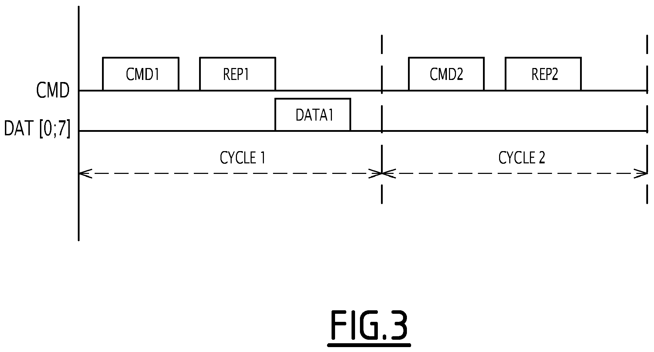

En se référant aux figures 2 et 3, le fonctionnement du dispositif de sécurité 20 va être expliqué.

Le procédé de sécurité 100 est mis en oeuvre lorsque le processeur 10 cherche à accéder à la mémoire 30.

Ainsi, au cours d'un cycle de fonctionnement du canal de communication, le processeur 10 émet (étape 110) une nouvelle commande.

Par exemple, sur les figures 3, pour le premier cycle, CYCLE1, une commande CMD1 est émise par le processeur 10. Par exemple encore, pour le cycle suivant ou second cycle, CYCLE2, une commande CMD2 est émise par le processeur 10.

Une commande comporte une fonction (aussi dénommée action), ainsi qu'une adresse de la mémoire 30 où la fonction doit être appliquée. La fonction est par exemple une fonction d'écriture à l'adresse associée, une fonction de lecture de l'adresse associée, ou autre. Dans ce qui suit on considère par exemple que les commandes CMD1 et CMD2 sont des commandes d'écriture.

Toute commande émise par le processeur 10 sur le bus de commande 41 est interceptée par le composant programmable 22.

A l'étape 120, le composant programmable 22 filtre la commande interceptée.

Pour cela, l'unité de filtrage 21 compare la commande avec la liste des commandes interdites de manière à déterminer si la commande reçue est autorisée et doit être transmise à la mémoire 30 ou si la commande reçue est interdite et doit être rejetée.

Dans le cas où la commande est autorisée (cas par exemple de la commande CMD1), le composant programmable 22 est placé dans l'état passant pour le reste du cycle CYCLE 1.

Le procédé passe alors à l'étape 130, dans laquelle l'unité de filtrage 21 réémet la commande CMD1 sur le bus de commande 51.

A la suite de la réception de la commande CMD1 sur le bus de commande 51, la mémoire 30 émet une réponse, REP1, à destination de l'émetteur de la commande, indiquant que la mémoire 30 est prête à écrire des données à l'adresse indiquée dans la commande CMD1 et qu'elle attend de recevoir les données à écrire sur le bus de données 52.

Le composant programmable 22 étant passant, la réponse REP1 est réémise sur le bus de commande 41 vers le processeur 10.

Recevant la réponse REP1, le processeur 10 émet alors les données à écrire dans la mémoire sur le bus de données 42. Sur la figure 3 ces données sont représentées par le bloc DATA1.

Le composant programmable 22 étant passant, les données DATA1 reçues sur le bus de données 41 sont retransmises sur le bus de données 52 vers la mémoire 30.

Lorsque la mémoire 30 reçoit les données DATA1, elle les écrit à l'adresse indiquée dans la commande CMD1.

En revanche à l'étape 120, si l'unité de filtrage 21 détermine que la commande est interdite, le composant programmable 22 est placé dans l'état bloquant jusqu'à la fin du cycle CYCLE2, de sorte qu'aucune commande, ni donnée ne peut être transmise sur le second canal de communication 50.

Le procédé de sécurité 100 se déplace à l'étape 140, dans laquelle le composant programmable 22 émet, en réponse à la commande CMD2, une réponse REP2 sur le bus de commande 41 à destination du processeur 10. La réponse REP2 correspond à un rejet de la commande CMD2.

Lors de la réception de la réponse REP2 négative, le processeur 10 constatant que sa demande d'écriture a été rejetée, n'émet aucune donnée sur le bus de données 42.

Comme présenté ci-dessus en référence à l'étape 120, l'unité de filtrage 21 met en oeuvre des règles de sécurité pour déterminer si une commande reçue est autorisée oui ou non.

Le composant de confiance 26 peut venir modifier les règles de sécurité, de sorte que le résultat du filtrage d'une commande dépende du mode de fonctionnement courant du processeur.

Par exemple, dans le mode « boot », le composant de confiance 26 configure le composant programmable 22 pour qu'il bloque toute commande, pour éviter que la moindre donnée ne soit lue ou écrite dans la mémoire 30.

Par exemple encore, dans le mode « normal », le composant de confiance 26 configure le composant programmable 22 pour interdire les commandes d'écriture dans la mémoire 30, mais autoriser la lecture dans la mémoire 30.

Enfin, dans le mode « téléchargement », le composant de confiance 26 configure le composant programmable 22 pour autoriser les commandes d'écriture dans la mémoire 30, de manière à permettre le stockage du logiciel que le processeur a téléchargé.

De nombreuses variantes du mode de réalisation venant d'être décrit sont envisageables par l'homme du métier.

Notamment, le dispositif de sécurité pourrait être constitué d'un seul composant ou de plus de deux composants.

Cependant, il est préférable que le dispositif de sécurité soit constitué de deux composants. Le composant programmable devant être un composant logique rapide de manière à ne pas introduire de latence le long du canal de communication entre le processeur et la mémoire. En effet, l'introduction d'une latence pourrait indiquer au processeur 10 qu'il n'accède pas directement à la mémoire 30. Un tel composant rapide est par exemple un circuit ASIC (« Application-specific integrated circuit »), ou un circuit logique programmable, tel qu'un FPGA (« field-programmable gate array") ou un CPLD (« complex programmable logic device").

Le composant de confiance permettant de commander le composant programmable n'a pas besoin d'être aussi rapide que le composant programmable, puisque les changements de mode de fonctionnement du processeur n'interviennent qu'avec un temps caractéristique bien supérieur à celui des échanges sur le canal de communication.

En variante, au lieu que le composant de confiance ne commande le composant programmable à travers la reconfiguration des règles de sécurité que ce dernier doit mettre en oeuvre, le composant de confiance pourrait commander directement le composant programmable pour le faire passer de l'état bloquant à l'état passant et inversement. Le composant programmable est alors réduit à un interrupteur logique : dans l'état bloquant, toutes les commandes sont rejetées, et dans l'état passant, toutes les commandes sont transmises à la mémoire. Alternativement, la liste de commandes interdites est stockée dans le composant programmable sans pouvoir la modifiée, et le composant de confiance vient commander le composant programmable pour le faire placer soit dans un état actif (dans lequel le composant programmable filtre les commandes selon la listes de commandes interdites), soit dans un état passant (dans lequel le composant programmable est totalement transparent laissant passer toutes les commandes).

En variante, le bus de commande au lieu d'être indépendant du bus de données, pourrait être multiplexé avec ce dernier.

Par ailleurs, si dans le mode de réalisation présenté ci-dessus en détail, les premier et second bus sont de même nature, en variante, ils pourraient être de nature différente. Il y aurait ainsi une « rupture » de bus entre le processeur et le composant mémoire. Par exemple, le premier bus entre le processeur et le composant programmable pourrait être du type Ethernet, tandis que le second bus entre le composant programmable et le composant mémoire serait du type eMMC. Cette variante présente l'avantage de pouvoir adapter les débits sur chacun des premier et second bus indépendamment l'un de l'autre, notamment pour corriger des effets de latence introduits entre le processeur et la mémoire eMMC. Elle permet également une adaptation du composant mémoire aux spécifications du port (et du pilote associé) utilisé par le processeur pour piloter le composant mémoire. Il est à noter que dans cette variante, le composant programmable n'effectue pas une simple interception des commandes, mais une conversion des commandes pour jouer le rôle d'interface entre les premier et second bus. Le composant programmable n'émule plus le comportement du composant mémoire qu'il masque au processeur.

La présente invention pourra aussi couvrir d'autres types de composant mémoire. En effet, outre les mémoires eMMC (intégrant un bus eMMC et une mémoire flash), l'invention est applicable aux mémoires I2C (« Inter Integrated Circuit ») (intégrant un bus I2C et une mémoire par exemple RAM ou flash), aux mémoires SPI (« Serial Peripheral Interface ») (intégrant un bus SPI et une mémoire par exemple RAM ou flash), aux cartes SD (« Secure Digital »), ou l'équivalent. De manière générale, l'invention s'applique à tout composant mémoire disposant d'un bus de commande piloté par le composant hôte.

## Revendications

1. Système électronique (1) du type comportant un processeur (10), un composant mémoire (30), et un canal de communication, le canal de communication comportant au moins un bus de commande pouvant être piloté par le processeur (10) pour accéder au composant mémoire (30), le système électronique (1) comportant, en outre, un composant programmable (22), le composant programmable (22) étant intégré le long du canal de communication, en coupure entre le processeur (10) et le composant mémoire (30), le canal de communication comportant alors un premier bus de commande (41) entre le processeur (10) et le composant programmable (22) et un second bus de commande (52) entre le composant programmable (22) et le composant mémoire (30), le composant programmable (22) étant adapté pour filtrer les commandes adressées par le processeur au composant mémoire, **caractérisé en ce que** le composant programmable (22) est du type composant logique rapide, de préférence du type ASIC, FPGA ou CPLD, et **en ce que** le système électronique (1) comporte, en outre, un composant de confiance (26) propre à commander le composant programmable (22) de manière à sélectionner, directement ou indirectement, l'état bloquant ou l'état passant du composant programmable (22).

2. Système selon la revendication 1, dans lequel, lorsque le composant programmable (22) est dans un état passant, le composant programmable (22) filtre une commande reçue du processeur (10) de sorte que ladite commande soit retransmise au composant mémoire (30).

3. Système selon la revendication 1 ou la revendication 2, dans lequel, lorsque le composant programmable (22) est dans un état bloquant, le composant programmable (22) filtre une commande reçue du processeur (10) de sorte que ladite commande soit rejetée.

4. Système selon la revendication 2 ou la revendication 3, dans lequel l'état bloquant ou l'état passant du composant programmable (22) est sélectionné en fonction du résultat d'un test consistant à comparer la commande reçue du processeur (10) avec une liste de commandes interdites mémorisée par le composant programmable.

5. Système selon l'une quelconque des revendications 1 à 4, dans lequel le composant programmable (22) est du type ASIC, FPGA ou CPLD.

6. Système selon l'une quelconque des revendications 1 à 5, dans lequel le composant de confiance (26) est propre à déterminer un mode de fonctionnement courant du processeur (10) et à commander le composant programmable (22) en fonction du mode de fonctionnement courant du processeur (10).

7. Système selon l'une quelconque des revendications 1 à 6, dans lequel le composant de confiance (26) est propre à commander le composant programmable (22) en mettant à jour une liste de commandes interdites stockée dans la composant programmable et utilisée par le composant programmable pour filtrer les commandes reçues du processeur (10).

8. Système selon l'une quelconque des revendications 1 à 7, dans lequel les premier et second bus sont identiques, le composant programmable effectuant une interception des commandes, ou dans lequel les premier et second bus sont différents, le composant programmable effectuant une conversion des commandes.

9. Système selon l'une quelconque des revendications 1 à 8, dans lequel le composant mémoire (30) est une mémoire eMMC, I2C, SPI ou une carte SD.

10. Composant programmable (22) implanté dans un système électronique (1) selon l'une quelconque des revendications 1 à 9.

## Patentansprüche

1. Elektronisches System (1) des Typs, umfassend einen Prozessor (10), eine Speicherkomponente (30) und einen Kommunikationskanal, der Kommunikationskanal umfassend mindestens einen Steuerbus, der von dem Prozessor (10) gesteuert werden kann, um auf die Speicherkomponente (30) zuzugreifen, das elektronische System (1) ferner umfassend eine programmierbare Komponente (22), wobei die programmierbare Komponente (22) entlang des Kommunikationskanals durchgehend zwischen dem Prozessor (10) und der Speicherkomponente (30) integriert ist, der Kommunikationskanal dann umfassend einen ersten Steuerbus (41) zwischen dem Prozessor (10) und der programmierbaren Komponente (22) und einen zweiten Steuerbus (52) zwischen der programmierbaren Komponente (22) und der Speicherkomponente (30), wobei die programmierbare Komponente (22) angepasst ist, um die von dem Prozessor an die Speicherkomponente gerichteten Befehle zu filtern, **dadurch gekennzeichnet, dass** die programmierbare Komponente (22) vom Typ einer schnellen logischen Komponente ist, vorzugsweise vom Typ ASIC, FPGA oder CPLD, und dass das elektronische System (1) ferner eine Konfidenzkomponente (26) umfasst, die geeignet ist, die programmierbare Komponente (22) zu steuern, um direkt oder indirekt den Sperrzustand oder den Durchlasszustand der programmierbaren Komponente (22) auszuwählen.

2. System nach Anspruch 1, wobei, wenn die programmierbare Komponente (22) in einem leitenden Zustand ist, die programmierbare Komponente (22) einen von dem Prozessor (10) empfangenen Befehl filtert, sodass der Befehl an die Speicherkomponente (30) weitergeleitet wird.

3. System nach Anspruch 1 oder 2, wobei, wenn die programmierbare Komponente (22) in einem sperrenden Zustand ist, die programmierbare Komponente (22) einen von dem Prozessor (10) empfangenen Befehl filtert, sodass der Befehl zurückgewiesen wird.

4. System nach Anspruch 2 oder 3, wobei der Sperrzustand oder der Durchgangszustand der programmierbaren Komponente (22) abhängig von dem Resultat eines Tests ausgewählt wird, bei dem der von dem Prozessor (10) empfangene Befehl mit einer von der programmierbaren Komponente gespeicherten Liste verbotener Befehle verglichen wird.

5. System nach einem der Ansprüche 1 bis 4, wobei die programmierbare Komponente (22) vom Typ ASIC, FPGA oder CPLD ist.

6. System nach einem der Ansprüche 1 bis 5, wobei die Konfidenzkomponente (26) geeignet ist, um einen aktuellen Betriebsmodus des Prozessors (10) zu bestimmen und die programmierbare Komponente (22) abhängig von dem aktuellen Betriebsmodus des Prozessors (10) zu steuern.

7. System nach einem der Ansprüche 1 bis 6, wobei die Konfidenzkomponente (26) geeignet ist, um die programmierbare Komponente (22) zu steuern, indem sie eine Liste verbotener Befehle aktualisiert, die in der programmierbaren Komponente gespeichert ist und von der programmierbaren Komponente verwendet wird, um die von dem Prozessor (10) empfangenen Befehle zu filtern.

8. System nach einem der Ansprüche 1 bis 7, wobei der erste und der zweite Bus gleich sind, wobei die programmierbare Komponente ein Abfangen der Befehle durchführt, oder wobei der erste und der zweite Bus verschieden sind, wobei die programmierbare Komponente eine Umwandlung der Befehle durchführt.

9. System nach einem der Ansprüche 1 bis 8, wobei die Speicherkomponente (30) ein eMMC-, I2C-, SPI-Speicher oder eine SD-Karte ist.

10. Programmierbare Komponente (22), die in einem elektronischen System (1) nach einem der Ansprüche 1 bis 9 implementiert ist.

## Claims

1. An electronic system (1) of the type comprising a processor (10), a memory component (30), and a communication channel, the communication channel comprising at least one command bus that can be driven by the processor (10) to access the memory component (30), the electronic system (1) further comprising a programmable component (22), the programmable component (22) being integrated along the communication channel, cutting between the processor (10) and the memory component (30), the communication channel comprising a first command bus (41) between the processor (10) and the programmable component (22) and a second command bus (52) between the programmable component (22) and the memory component (30), the programmable component (22) being adapted to filter the commands addressed by the processor to the memory component, **characterised in that** the programmable component (22) is of the fast logic component type, preferably of the ASIC, FPGA or CPLD type, and **in that** the electronic system (1) further comprises a trusted component (26) adapted to command the programmable component (22) so as to select, directly or indirectly, the off-state or the on-state of the programmable component (22).

2. The system as claimed in claim 1, wherein when the programmable component (22) is in an on-state, the programmable component (22) filters a command received from the processor (10) so that said command is retransmitted to the memory component (30).

3. The system according to claim 1 or claim 2, wherein, when the programmable component (22) is in an off-state, the programmable component (22) filters a command received from the processor (10) so that said command is rejected.

4. The system according to claim 2 or claim 3, wherein the off-state or on-state of the programmable component (22) is selected in accordance with the result of a test that consists of comparing the command received from the processor (10) with a list of prohibited commands stored by the programmable component.

5. The system according to any one of claims 1 to 4, wherein the programmable component (22) is of the ASIC, FPGA, or CPLD type.

6. The system according to any one of claims 1 to 5, wherein the trusted component (26) is adapted to determine a current operating mode of the processor (10) and to command the programmable component (22) dependent on the current operating mode of the processor (10).

7. The system according to any one of claims 1 to 6, wherein the trusted component (26) is adapted to command the programmable component (22) by updating a list of prohibited commands stored in the programmable component and used by the programmable component to filter commands received from the processor (10).

8. The system according to any one of claims 1 to 7, wherein the first and second buses are identical, the programmable component performing commands interception, or wherein the first and second buses are different, the programmable component performing command conversion.

9. The system according to any one of claims 1 to 8, wherein the memory component (30) is an eMMC, 12C, or SPI memory or an SD card.

10. A programmable component (22) installed in an electronic system (1) according to any of claims 1 to 9.
